# EUROPÄISCHE PATENTANMELDUNG

(11) **EP 1 586 435 A2**
(43) Veröffentlichungstag der Anmeldung: **19.10.2005**
(21) Anmeldenummer: 05013528.4
(22) Anmeldetag: 22.05.2001
(51) Int. Cl.: B29C 49/04, B29K 23/00

(54) **Verfahren zur Herstellung von blasgeformten Sonnenblenden mit unterschiedlichen Sonnenblenden-Aussenflächen**

(30) Priorität: 22.05.2000 DE 10025290
(62) Teilanmeldung aus: 01947308.1
(71) Anmelder: Fico I.T.M., S.A., 08100 Mollet del Valles (ES)
(72) Erfinder: Esteban, Miguel Angel Sabrido, 08041 Barcelona (ES)
(74) Vertreter: Hess, Peter K. G.

(57) **Zusammenfassung**

Die vorliegende Erfindung schafft ein Verfahren zur Herstellung blasgeformter Sonnenblenden mit einer gleichzeitigen bevorzugten Gestaltung der Außenflächen der Sonnenblende. Die Außenfläche der Sonnenblende variiert dabei in Farbe, Oberflächenstruktur und Rauheit. Auf diese Weise erhält man eine zur Innenausstattung eines jeden Kraftfahrzeugs passende Sonnenblende, die in ihrer Herstellung kostengünstig ist. Die Außenfläche der Sonnenblende wird in Struktur und Rauheit komplementär zu den Innenflächen (4) des Blaswerkzeugs (1, 1') ausgebildet. Ergänzend dazu wird die Farbe der Außenflächen der Sonnenblende über das Färben des verwendeten Polypropylens (2) eingestellt. Das Färben erfolgt mit organischen und anorganischen Pigmenten.

## Beschreibung

### 1. Anwendungsgebiet

Die Erfindung betrifft Sonnenblenden für Kraftfahrzeuge zur Abschattung des Kopfbereichs von Insassen gegen Lichteinstrahlung. Derartige Sonnenblenden können in Form, Oberflächenbeschaffenheit und Funktionalität unterschiedlich ausgebildet sein.

### 2. Stand der Technik

Sonnenblenden werden im wesentlichen hergestellt, seitdem Kraftfahrzeuge produziert werden. Sie sind ein wesentlicher Bestandteil der Innenausstattung eines Kraftfahrzeugs und können in Abhängigkeit von der Qualität der Innenausstattung in Gestaltung, Form, verwendeten Materialien und Struktur variieren. Des weiteren können die Sonnenblenden mit zusätzlichen technischen Geräten versehen werden, wie zum Beispiel mit Spiegeln und Innenleuchten.

Im Stand der Technik sind verschiedene Verfahren zur Herstellung von Sonnenblenden bekannt. Erste technische Ausführungen von Sonnenblenden bestehen beispielsweise aus in der Form von Sonnenblenden geformten Drahtrahmen, die dann durch ein stabilisierendes Element, wie zum Beispiel Pappe, ausgefüllt werden. Auf die großflächigen Seiten des stabilisierenden Elements werden dann Schaumstoffschichten geklebt, die den Drahtrahmen überdecken. Die auf diese Weise gebildete Sandwichstruktur wird nachfolgend beispielsweise durch eine Kunststoff- oder Stoffschicht ummantelt, um die Sonnenblende optisch ansprechend zu gestalten.

Neben der Formvorgabe und Stabilisierung der Sonnenblende dient der Drahtrahmen der Aufnahme von Gelenken, um die Sonnenblende an geeigneter Stelle im Fahrzeug zu befestigen. Gemäß einer weiteren Ausführungsform nach dem Stand der Technik wird der Drahtrahmen innerhalb einer Form durch Kunststoff umschäumt und bildet einen Sonnenblendenkörper. Dieser wird, wie vorhergehend beschrieben, durch beispielsweise Kunststoff oder Stoff ummantelt.

Gemäß eines weiteren, an sich bekannten Herstellungsverfahrens werden Sonnenblendenkörper durch Blasformung hergestellt, wobei ein weicher Kunststoffschlauch mittels Druckluft in einem Blaswerkzeug aufgeweitet wird. Das Blaswerkzeug gibt dabei die spätere Gestalt des Sonnenblendenkörpers vor. Derartige Kunststoff-Sonnenblendenkörper sind mit geringem verfahrenstechnischen Aufwand herstellbar, sind jedoch in Oberflächengestaltung und Erscheinungsbild nicht ansprechend. Bei Bedarf werden die Sonnenblendenkörper beispielsweise durch Kunststoffschichten oder Stoff ummantelt und auf diese Weise an die Innenausstattung des Kraftfahrzeugs angepasst. Dabei ist es notwendig, dass wesentliche Arbeitsschritte, wie z. B. das Aufziehen der Stoffhülle auf den Sonnenblendenkörper in Handarbeit ausgeführt werden.

Aufgrund der Vielzahl der Verfahrensschritte zur Herstellung eines Sonnenblendenkörpers, die teilweise in Handarbeit ausgeführt werden, ist die Produktion von optisch ansprechenden Sonnenblenden verfahrenstechnisch aufwendig sowie zeit- und kostenintensiv. Eine farbliche Abstimmung der Innengestaltung des Kraftfahrzeugs und der Sonnenblende ist nur über die Wahl passender Stoff- oder Kunststoffummantelungen möglich.

Daraus folgt das Problem, die Farb- und Oberflächengestaltung von Sonnenblenden in das Herstellungsverfahren zu integrieren. Dies gilt besonders für die Blasformung. Werden größtenteils in Handarbeit ausgeführte Gestaltungsschritte, wie z. B. Ummantelungsverfahren, durch gleichwertige verfahrenstechnische Schritte in den Blasformungsprozess integriert, können dadurch die Sonnenblenden bei gleichem Erscheinungsbild kostengünstiger und in kürzerer Zeit hergestellt werden.

Zur Ummantelung der Sonnenblendenkörper mit Kunststoff wird herkömmlicherweise Ultraschallschweißen verwendet. Dabei kann der ummantelnde Kunststoff in Farbe und Oberflächenstruktur variieren und so das Erscheinungsbild der Sonnenblende passend gestalten. Bei der besonders aufwendigen Ummantelung mit Stoff wird das Erscheinungsbild des Sonnenblendenkörpers und seine Haptik besonders luxuriösen Anforderungen angepasst. Dazu wird ein strumpfförmiger Stoffüberzug über den Sonnenblendenkörper gezogen. Zur Fixierung des Stoffüberzugs weist der Sonnenblendenkörper eine spezielle Klemmvorrichtung auf, so dass damit das noch offene Ende des strumpfförmigen Stoffüberzugs verschlossen wird und der Sonnenblendenkörper vollständig von einer Stoffhülle umgeben ist.

Der im Blasformungsverfahren hergestellte Klemmmechanismus zum Verschließen der Stoffhülle ist in seiner Herstellung sehr aufwendig und kann nicht mehrfach geschlossen und geöffnet werden, wie z. B. zum Austauschen der Stoffhülle. Andererseits wird mit Hilfe des Klemmmechanismus die Stoffhülle derart verschlossen, dass nur eine Naht sichtbar bleibt.

Daraus folgen zwei weitere Probleme. Die aufwendige Produktion eines Klemmmechanismus muss in den Herstellungsprozess des Sonnenblendenkörpers eingeschlossen sein. Außerdem sind die Stoffummantelungen nicht auswechselbar, so dass insbesondere bei Verschmutzung oder Abnutzung nur eine vollständig neue Sonnenblende eingebaut werden kann, um den Schaden zu beheben.

Aus Patent Abstracts of Japan vol. 1997, No. 10, (1997-10-31) & JP 09142143A ist ein Verfahren gemäß dem Oberbegriff des Anspruchs 1 bekannt.

### 3. Zusammenfassung der Erfindung

Die Lösung der Probleme des Standes der Technik erfolgt durch die vorliegende Erfindung gemäß Patentanspruch 1.

Die vorliegende Erfindung gemäß Patentanspruch 1 umfasst ein Verfahren, mit dem blasgeformte Sonnenblendenkörper aus Kunststoff, insbesondere Polypropylen, mit unterschiedlichen Sonnenblendenaußenflächen hergestellt werden, wobei das Polypropylen der blasgeformten Sonnenblende undurchsichtig gefärbt wird und die Oberflächenstruktur und Rauheit der Außenfläche der Sonnenblende während der Blasformung komplementär zur Oberflächenstruktur der Innenflächen der Blaswerkzeughälften ausgebildet werden.

Durch die erfindungsgemäße Verwendung gefärbter Kunststoffe und strukturierter Innenflächen der Blaswerkzeughälften im Blasformungsverfahren werden die zur Herstellung notwendigen Verfahrensschritte reduziert, weil die Ummantelung durch die oben genannten Kunststoffschichten oder Stoffe nicht mehr notwendig ist. Dadurch werden Sonnenblendenkörper mit verfahrenstechnisch geringem Aufwand und kostengünstig hergestellt.

### 4. Kurze Beschreibung der Zeichnung

Die bevorzugten Ausführungsformen der Erfindung ergeben sich aus den Unteransprüchen und werden mit Hilfe der nachfolgenden Beschreibung und der Zeichnung näher erläutert. Es zeigt:
Fig. 1 (A) eine schematische Darstellung von Verfahrensschritt 1 eines Verfahrens zur Herstellung blasgeformter Sonnenblendenkörper gemäß einer bevorzugten Ausführungsform aus Polypropylen: Einbringen des Kunststoffschlauchs zwischen die Blaswerkzeughälften;
Fig. 1 (B) eine schematische Darstellung von Verfahrensschritt 2 eines Verfahrens zur Herstellung blasgeformter Sonnenblendenkörper gemäß der bevorzugten Ausführungsform: Aufgeblasener Polypropylenschlauch bei geschlossenem Blaswerkzeug;
Fig. 2 (A) die Ausschnittsdarstellung einer Sonnenblende mit Stoffhülle gemäß einer Ausführungsform, die nicht unter die Patentansprüche fällt, wobei der die Stoffhülle verschließende Reißverschluss an den gegenüberliegenden Enden der Stoffhülle befestigt ist;
Fig. 2 (B) die Ausschnittsdarstellung einer Sonnenblende mit Stoffhülle gemäß einer Ausführungsform, die auch nicht unter die Patentansprüche fällt, wobei der die Stoffhülle verschließende Reißverschluss an um 180° umgeschlagenen gegenüberliegenden Enden der Stoffhülle befestigt ist; und
Fig. 2 (C) die Darstellung einer Sonnenblende mit Stoffhülle gemäß einer Ausführungsform, die wiederum nicht unter die Patentansprüche fällt, wobei der die Stoffhülle verschließende Reißverschluss an einer der schmaleren Stirnseiten der Sonnenblende angeordnet ist.

### 5. Detaillierte Beschreibung der Erfindung

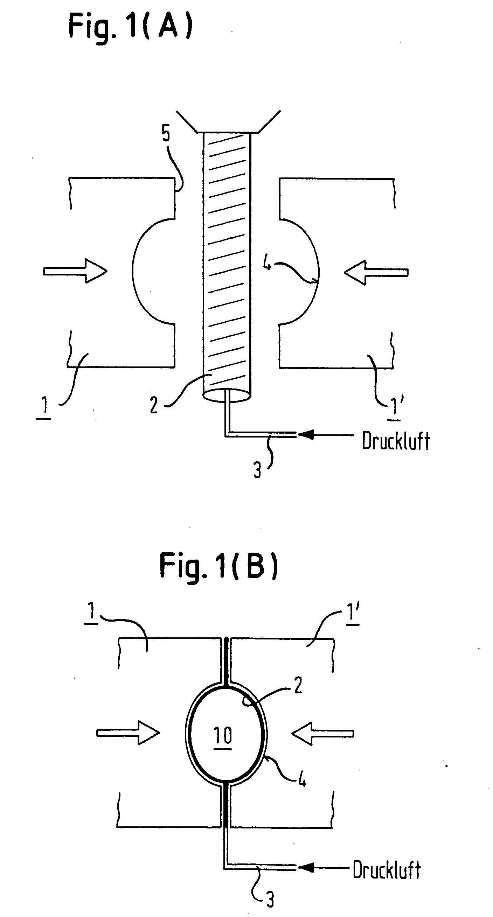

Die Herstellung des Sonnenblendenkörpers erfolgt erfindungsgemäß durch ein an sich bekanntes Blasformungsverfahren. Dieses Verfahren ist schematisch in Fig. 1 (A) und (B) dargestellt. Ein auf ca. 180 °C erwärmter Kunststoffschlauch, bevorzugt ein Polypropylenschlauch 2, wird zwischen zwei Blaswerkzeughälften 1,1' eingebracht. Die Erwärmung des Polypropylenschlauchs 2 dient der besseren Verformbarkeit im Blaswerkzeug.

Die Blaswerkzeughälften 1,1' werden dann in Pfeilrichtung aufeinanderzu bewegt, bis sich die Kanten 5 der Blaswerkzeughälften 1,1' aufeinander abstützen und das Blaswerkzeug dichtend verschließen (Fig. 1 (B)). Danach wird der sich in dem Blaswerkzeug befindende Polypropylenschlauch 2 erfindungsgemäß bevorzugt über eine Druckluftleitung 3 aufgeweitet und dadurch in die durch das Blaswerkzeug vorgegebene Gestalt gebracht. Durch den Aufweitvorgang wird der Kunststoff gegen die Innenflächen 4 der Blaswerkzeughälften 1,1' gedrückt und nimmt die zu den Innenflächen 4 und deren Oberflächenbeschaffenheit, wie Struktur und Rauheit, komplementäre Gestalt an.

Erfindungsgemäß werden Blaswerkzeughälften 1,1' unterschiedlicher Innenflächenstruktur verwendet, um blasgeformte Sonnenblendenkörper 10 unterschiedlicher Oberflächenstruktur herzustellen. Mögliche Profile der Innenfläche 4 der Blaswerkzeughälften 1,1' sind Noppen, Rillen, strukturierte Karos und andere, die jeweils unterschiedliche optische und haptische Effekte beim Benutzer erzeugen.

Neben der Oberflächenstruktur des blasgeformten Sonnenblendenkörpers 10 kann erfindungsgemäß seine Farbe variiert werden. Die Farbvariation erfolgt durch das Einfärben des erfindungsgemäß bevorzugten Polypropylens, bevor dieses zu einem Polypropylenschlauch 2 extrudiert wird. Polypropylen wird beispielsweise durch die Anwendung organischer oder anorganischer Pigmente eingefärbt. Die durchsichtige oder undurchsichtige farbliche Gestaltung des blasgeformten Sonnenblendenkörpers 10 wird auf diese Weise auf die Innenausstattung des Kraftfahrzeugs abgestimmt, ohne dass aufwendige Verfahrensschritte, wie beispielsweise das Zuschneiden und Ultraschallschweißen einer Kunststoffummantelung, wie oben beschrieben, notwendig sind.

Somit kann mit dem vorliegenden erfindungsgemäßen Verfahren eine kostengünstige, in Farbe und Oberflächengestaltung an die Innenausstattung des Kraftfahrzeugs angepasste blasgeformte Sonnenblende hergestellt werden.

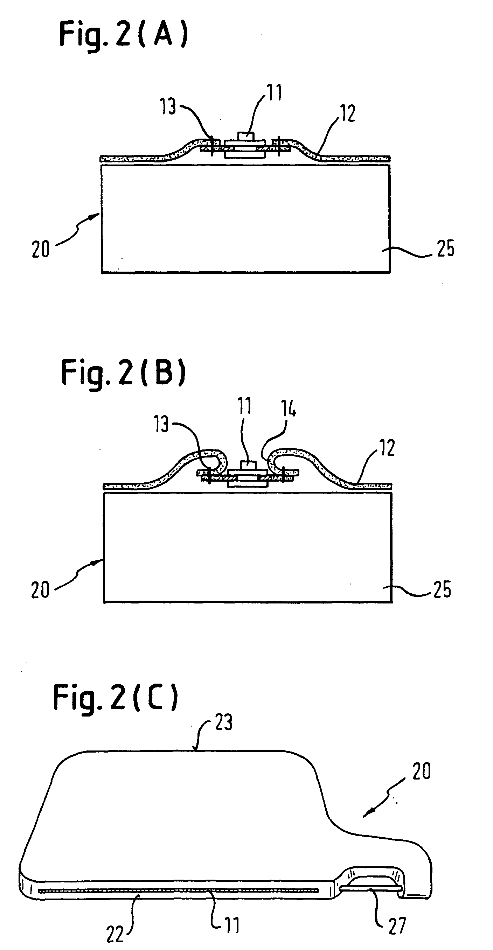

Die Figuren 2(A) und (B) zeigen eine Sonnenblende, die nicht unter die Patentansprüche fällt. Diese Sonnenblende, ist mit einer Stoffhülle 12 mit Reißverschluss 11 zur Ummantelung eines Sonnenblendenkörpers 25 versehen. Der die Stoffhülle 12 des Sonnenblendenkörpers 25 verschließende Reißverschluss 11 verläuft bevorzugt an einer der schmalen Stirnseiten des Sonnenblendenkörpers 25 (Fig. 2 (C)) und noch mehr bevorzugt an derjenigen schmalen Stirnseite der Sonnenblende, die sich in unmittelbarer Nachbarschaft zur Lagerachse 27 der Sonnenblende erstreckt. Bei dieser Ausführungsform kann der stoffummantelte Sonnenblendenkörper 25 so im Fahrzeuginneren eingebaut werden, dass sich die Stirnseite 22 der Sonnenblende 20 mit Reißverschluss 11 an der den Insassen abgewandten Seite befindet und dadurch nicht sichtbar ist. Zwei derartige Ausführungsformen stellen die Fign. 2 (A) und (B) dar.

Wie Fign. 2 (A) und (B) zeigen, ist der Reißverschluss 11 auf verschiedene Art in die Stoffhülle eingenäht. Bezugnehmend auf Fig. 2 (A) ist der Reißverschluss 11 beispielsweise an den beiden gegenüberliegenden Enden der Stoffhülle 12 jeweils durch eine Naht 13 befestigt. Bei dieser Befestigungsart ist die Naht 13 von außen sichtbar. Jedoch ist diese Art des Einnähens einfach ausführbar und erfordert keine aufwendigen technischen Hilfsmittel, wodurch die Stoffhülle preiswert herstellbar ist.

Eine weitere Art, den Reißverschluss 11 an der Stoffhülle 12 zu befestigen, zeigt Fig. 2 (B). Hier ist der Reißverschluss 11 an den um 180° umgeschlagenen Enden der sich gegenüberliegenden Enden der Stoffhülle 12 durch verborgene Nähte 13 befestigt. Bei dieser Ausführungsform erhält man eine verdeckte oder von außen nicht sichtbare Naht 13. Zudem wird der Reißverschluss 11 teilweise oder vollständig durch den entstehenden Saum 14 bedeckt, was das Erscheinungsbild der Sonnenblende 20 verbessert, sollte die Naht in einem durch die Fahrzeuginsassen sichtbaren Bereich angebracht sein, beispielsweise an der den Kraftfahrzeuginsassen zugewandten Stirnseite 23, siehe Fig. 2 (C) der Sonnenblende 20.

### Bezugszeichen:

- 1,1': Blaswerkzeugshälften
- 2: Kunststoffschlauch
- 3: Druckluftleitung
- 4: Innenfläche der Blaswerkzeughälften 1,1'
- 5: Kante der Blaswerkzeughälfte
- 6: Sonnenblendenkörper
- 10: Sonnenblendenkörper unterschiedlicher Oberflächengestaltung
- 11: Reißverschluss
- 12: Stoffhülle
- 13: Naht
- 14: Saum
- 20: Sonnenblende mit Stoffhülle
- 22,23: Sonnenblendenstimseite
- 25: Sonnenblendenkörper
- 27: Lagerachse

## Patentansprüche

1. Verfahren zur Herstellung einer blasgeformten Sonnenblende (10) aus Kunststoff mit unterschiedlichen Sonnenblenden-Außenflächen, wobei:
a) die Oberflächenstruktur und Rauheit der Außenfläche der Sonnenblende (10) während der Blasformung komplementär zur Oberflächenstruktur der Innenflächen (4) der Blaswerkzeughälften (1, 1') ausgebildet wird, **dadurch gekennzeichnet, dass**:
b) die Sonnenblende (10) aus einem mit organischen oder anorganischen Pigmenten undurchsichtig eingefärbten Polypropylenschlauch (2) blasgeformt wird.

2. Verfahren nach Anspruch 1, wobei Blaswerkzeughälften (1, 1') mit unterschiedlicher Oberflächenstruktur und Rauheit der Innenflächen (4) benutzt werden.
